# EUROPEAN PATENT APPLICATION

(11) **EP 1 304 156 A1**
(43) Date of publication of application: **23.04.2003**
(21) Application number: 02102344.5
(22) Date of filing: 11.09.2002
(51) Int. Cl.: B01D 53/94, B01J 23/00

(54) **A sulphur tolerant lean NOx trap**

(30) Priority: 18.10.2001 US 682781
(71) Applicant: Ford Global Technologies, Inc., Dearborn, Michigan 48126 (US)
(72) Inventor: Guttridge, Diane, L., Groose Ile, MI 48138 (US); Li, Jun, Canton, MI 48188 (US); Chattha, Mohinder Singh, Northville, MI 48167 (US); Kudla, Robert, J., Canton, MI 48187 (US); Watkins, William Lewis Henderson, Toledo, MI 43607 (US)
(74) Representative: Messulam, Alec Moses

(57) **Abstract**

The present invention provides a composition and method for storing and reducing NOₓ for lean burn internal combustion engines. The present invention uses composite metal oxides, in a spinel structure, having the formula MgAl₂O₄, in conjunction with a typical Lean NOₓ trap (LNT) formulation to form an integrated LNT. The composite metal oxides in spinel structure act primarily as a SOₓ trapping element and also a secondarily NOₓ trapping element within the integrated LNT. In this integrated LNT, the sulphur is trapped and released in a way that does not allow the sulphur to go to the primary NOₓ trapping element, i.e. the alkali or alkali earth metal oxides, to poison the integrated LNT; thereby, leaving more reactive sites for the NOₓ trapping and conversion.

## Description

The present invention relates to a composition and method for controlling exhaust emissions, especially nitrogen oxides emissions, from combustion engines. More specifically, the present invention relates to a series of composite metal oxides that significantly improve the sulphur tolerance of a Lean NOₓ Trap (LNT).

An approach for treating the NOₓ emissions from lean-burn engines is the use of NOₓ traps. A LNT typically contains precious metals, alkali or alkali earth metals, and alumina. A generally accepted pathway for reactions of LNT is that under lean conditions, NO is oxidized to NO₂, which is followed by subsequent formation of a nitrate with alkali or alkali earth metal(s), e.g. Barium. Under stoichiometric or rich operation, the stored nitrate is thermodynamically unstable. The stored NOₓ is released. The NOₓ then catalytically reacts with reducing species in the exhaust gas to form N₂.

The alkali or alkali earth metal(s) that are typically used for NOₓ sorption are readily poisoned by sulphur oxides in the exhaust gas. Over time, the sulphur oxides react with these trapping elements forming sulphates which are more stable than corresponding nitrates.

It is an object of this invention to provide an improved lean NOₓ trap and a method for reducing impurities in the exhaust gases from an internal combustion engine.

According to a first aspect of the invention there is provided a lean NOₓ trap characterised in that the lean NOₓ trap is treated with a composite metal oxide having the formula AB₂O₄, where A is Mg and B is Al.

The composite metal oxide may be spinel in structure.

The composite metal oxide may be selected from MgAl₂O₄, MgAl₂O₄•MgO, MgAl₂O₄•CeO₂, or MgAl₂O₄•CeO₂-ZrO₂.

The lean NOₓ trap may be doped with the composite metal oxide to provide a composition comprising between about 70-98 wt % lean NOₓ trap and between about 2-30 wt % of said composite metal oxide.

The lean NOₓ trap may be doped with the composite metal oxide spinel to provide a composition comprising between about 80-98 wt % lean NOₓ trap and between about 2-20 wt % of the composite metal oxide.

The lean NOₓ trap is doped with the composite metal oxide spinel to provide a composition comprising between about 85-95 wt % lean NOₓ trap and between about 5-15 wt % of the composite metal oxide.

The lean NOₓ trap may be doped with MgAl₂O₄•CeO₂ or MgAl₂O₄•Ce-ZrO₂ to provide a composition comprising between about 80-100 wt % lean NOₓ trap and between about 0-20 wt % of MgAl₂O₄•CeO₂ or MgAl₂O₄•Ce-ZrO₂.

The lean NOₓ trap may be doped with MgAl₂O₄•CeO₂ or MgAl₂O₄•Ce-ZrO₂ to provide a composition comprising between about 85-98 wt % lean NOₓ trap and between about 2-15 wt % of MgAl₂O₄•CeO₂ or MgAl₂O₄•Ce-ZrO₂.

The lean NOₓ trap may be doped with MgAl₂O₄•CeO₂ or MgAl₂O₄•Ce-ZrO₂ to provide a composition comprising between about 90-96 wt % lean NOₓ trap and between about 4-10 (wt) % of MgAl₂O₄•CeO₂ or MgAl₂O₄•Ce-ZrO₂.

According to a second aspect of the invention there is provided a method for removing NOₓ and SOₓ impurities from exhaust gases characterised in that the method comprises providing a lean NOx trap in accordance with the first aspect of the invention and passing exhaust gas containing NOₓ and SOₓ over the composite metal oxide.

The SOₓ impurities may be stored at a temperature of between 200 to 600° C under lean and rich condition.

The SOₓ impurities may be released at a temperature of between 600 to 750° C under rich conditions.

The invention will now be described by way of example with reference to the accompanying drawing of which:-
Figure 1 shows the NOₓ trapping performance of lean NOₓ trap (LNT) A treated with and without 4 (wt) % of composite metal oxide MgAl₂O_{4;}
Figure 1a shows the temperature window of LNT A with MgAl₂O₄ and without MgAl₂O_{4;}
Figure 1b shows the sulphur tolerance of LNT A with MgAl₂O₄ and without MgAl₂O_{4;}
Figure 1c shows the de-sulfation performance of LNT A with MgAl₂O₄ and without MgAl₂O_{4;}
Figure 2 shows the NOx trapping performance of LNT B treated with and without the 4 (wt) % MgAl₂O₄-CeO₂ mixture;
Figure 2a shows the temperature window of LNT B with MgAl₂O₄•CeO₂ and without MgAl₂O₄•CeO_{2;}
Figure 2b shows the sulphur tolerance of LNT B with MgAl₂O₄•CeO₂ and without MgAl₂O₄•CeO_{2;} and
Figure 2c shows the desulfation performance of LNT B with MgAl₂O₄•CeO₂ and without MgAl₂O₄•CeO₂.

The present invention teaches a series of composite metal oxides and a method to inhibit sulphur poisoning of lean NOₓ traps. A typical LNT can be doped with the current composite metal oxides, that are spinel in structure. These spinel oxides can also be added during the manufacturing of the typical LNT to form integrated new LNTs. The integrated new LNTs have significantly better sulphur tolerance than a LNT without the composite metal oxides. The composite metal oxide is made to be primarily a sulphur trapping element and also a secondary NOₓ trapping element within the integrated LNT.

As stated in the Background, a LNT trap typically contains precious metals, alkali or alkali earth metals, and alumina.

A generally accepted pathway for reactions of LNT is that, under lean conditions, NO is oxidized to NO₂, which is followed by subsequent formation of a nitrate with alkali or alkali earth metal(s), e.g. Barium. Thus, the alkali or alkali earth metal(s) "trap" the NOₓ. The trapped nitrate is decomposed, or released, into NOₓ under stoichiometric and rich conditions. This NOₓ is then reacted with reductants such as HC, CO, and H₂ to form N₂, CO₂, and H₂O. While the primary trapping elements are the alkali or alkali earth metals, the secondary trapping element is the composite metal oxide. The combination of the primary and secondary trapping elements, in conjunction with the precious metal, forms the sulphur tolerant integrated LNT.

The temperature for NOₓ trapping is around 200 - 600° C, with optimum performance at around 350 - 400° C. The wider the temperature range or window, the more versatile the trap and therefore easier to be put on a vehicle.

The composite spinel metal oxides in the integrated LNT can trap the sulphur under both lean and rich conditions between 200 - 600° C. Once the spinel is saturated with attached sulphur so that the NOₓ trapping efficiency is reduced to a specified value, e.g. 85 %, then the LNT needs to be desulphated. This can be done by adjusting the exhaust to a rich condition, such as A/F = 8 - 14, and raising the LNT temperature to about 600-750° C for a short period of time, e.g. 1 - 5 minutes. The desulphated LNT will then have regenerated high NOₓ trapping efficiency.

The composite metal oxide is, for example, a stoichiometric spinel MgAl₂O₄, or a spinel MgAl₂O₄ having MgO on the surface (MgAl₂O₄•MgO), or a solid solution of stoichiometric spinel MgAl₂O₄ and excess MgO. It is believed that the spinel MgAl₂O₄ and/or the MgO on the surface of the composite metal oxide or in the solid solution forms a chemical bond with the absorbed SOₓ, forming surface sulphate and bulk complex sulphate with the composite metal oxides. Therefore, the primary NOₓ trapping element within the LNT is protected for NOₓ trapping. The sulphur tolerance of the LNT is thus improved. On the other hand, we found that surface sulphates and bulk complex sulphates are easier to remove under reducing conditions than those bulk sulphates formed with the primary NOₓ trapping element, in the case that no spinel oxides are included in the LNT. From these results, the desulfation of the integrated LNT with composite spinel metal oxides is also easier than with a typical LNT.

The composite metal oxide is in powder form. The powder is then made into a slurry in an amount between about 2-30 (wt) % of the total trap. Preferably, the powder is made into a slurry in an amount between about 2-20 (wt) % of the total trap. Most preferably, the powder is made into a slurry in an amount between about 5-15 (wt) % of the total trap. The trap is then dipped into the slurry, dried at 120° C in 6 hours, and calcined under 600° C for 10 hours. The coating of the slurry can be conducted after all the other components are fixed or in the same time with the primary NOₓ trapping elements.

Another option is to mix spinel oxide with CeO₂ powder in an amount between about 0-20 (wt) % of CeO₂ of the total mixture. Preferably, the CeO₂ powder is mixed in an amount between about 2-15 (wt) % of the total mixture. Most preferably, the CeO₂ powder is mixed in an amount between about 4-10 (wt) % of the total mixture. The trap is then dipped into the slurry of spinel oxide with CeO₂, dried at 120° C in 6 hours and calcined under 600° C for 10 hours. Similarly, the coating of the slurry can be conducted after all the other components are fixed or in the same time with the primary NOₓ trapping elements. Using spinel/CeO₂ (MgAl₂O₄•CeO₂) provides better sulphur tolerance than using spinel alone. It is believed that CeO₂ promotes the oxidation of SO₂ through its surface and lattice oxygen thereby promoting the sulphur oxides oxidation and attachment to the spinels thus improving the sulphur tolerance of the LNT.

Another option is to mix the oxide with CeO₂-ZrO₂ powder, in an amount between about 0-20 (wt) % of the total mixture. Preferably, the CeO₂-ZrO₂ powder is mixed in an amount between about 2-15 (wt) % of the total mixture. Most preferably, the CeO₂-ZrO₂ powder is mixed in an amount between about 4-10 (wt) % of the total mixture. The trap is then dipped into the slurry, dried at 120° C in 6 hours and calcined under 600° C for 10 hours. Again, the coating of the slurry can be conducted after all the other components are fixed or in the same time with the primary NOₓ trapping elements.

The method for removing NOₓ and SOₓ impurities from the exhaust gases involves adding a composite metal oxide in spinel structure to a typical LNT. The composite metal oxide is added in an amount between about 2-30 (wt) %. Preferably, the composite metal oxide is added in an amount between about 2-20 (wt) %. Most preferably, the composite metal oxide is added in an amount between about 5-15 (wt) %. The composite metal oxides are coated onto the typical LNT after all the other components are fixed or in the same time with the primary NOₓ trapping elements. The composite metal oxide is spinel in structure. The composite metal oxides are preferably MgAl₂O₄, MgAl₂O₄•xMgO, MgAl₂O₄•yCeO₂, or MgAl₂O₄•zCeO₂-ZrO₂, where x, y, and z are a number which would provide a correct wt % in accordance with the amount of composite metal oxides that is added to the total mixture. The LNT is doped with the composite metal oxide comprising between about 70-98 wt % LNT and about 2-30 wt % composite metal oxide.

The SOₓ impurities are mostly attached to the composite metal oxide in the form of surface sulphate and bulk composite sulphate at a temperature between 200 to 600° C under lean and rich condition. The SOₓ impurities are released at a temperature between 600 to 750° C under rich condition.

For this integrated LNT with composite spinel oxides, the storage and release conditions for NOₓ are similar to a typical NOₓ trap application condition. For example, the NOₓ is stored under lean condition (A/F>15) between 200 - 600° C, and then released and converted under stoichiometric and rich conditions (A/F ≤ 14.7) for a shorter period than the lean period between 200 - 600° C.

This cycling continues and during these cycling, the sulphur are attached mainly to spinel oxides site. When the NOₓ efficiency is reduced to a predetermined value due to sulphur poisoning, the trap is ready for a desulfation cycle. The temperature of the trap is raised to about 600 - 750° C under a rich condition, the sulphur attached to the spinel oxides is thus released, probably in the form of H₂S, and COS.

### EXAMPLE 1

For a preformed LNT, LNT A, a piece of LNT A is cut. 3 (wt) % of the total trap, of the stoichiometric spinel MgAl₂O₄ is made into a slurry. LNT A piece is dipped into the slurry and dried at 120° C for 6 hours. Then it is calcined in the oven at 600° C for 12 hours. A core of the integrated LNT (LNT A doped with spinel) with 19mm diameter and 25mm length was tested in a flow reactor. The feed gas contains 500 pm NO, 50 ppm hydrocarbons, 10% CO₂, and 10% H₂O. The feed gas also contains 6% O₂ under lean conditions. When the feed gas is switched to rich condition, the O₂ is replaced with a 1% CO/3300 ppm H₂ mixture. The gas space velocity during this evaluation is 30,0001/hr. The LNT is run under a lean to rich cycle of 5 minutes lean and 3 minutes rich at 360°C.

For the sulphur tolerance test 9 ppm SO₂ is added in the feed gas described above then the sample is tested under this new feed gas at 360° C for 40 hours.

After sulphur poisoning test, the integrated LNT is switched for a desulfation test. Here, the inlet gas temperature is raised to 625° C, under N₂ flow. Then, the feed gas composition is switched to the rich feed gas as described above. (No SO₂ is in the feed gas) After 5 minutes, the LNT is cooled down gradually under N₂ flow. The LNT is then tested at 360° C under 5 minutes lean and 3 minutes rich cycle, as described above, for NOₓ trapping efficiency. This procedure is repeated for desulfation temperatures of 650°, 675°, 700°, 725°, 750° C.

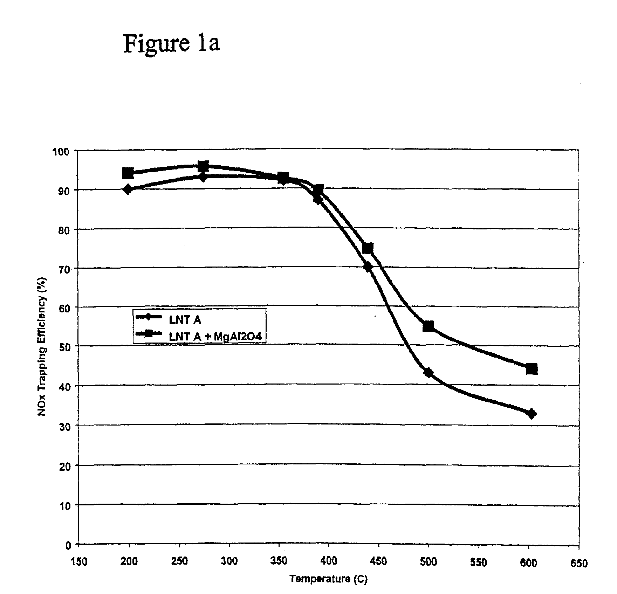

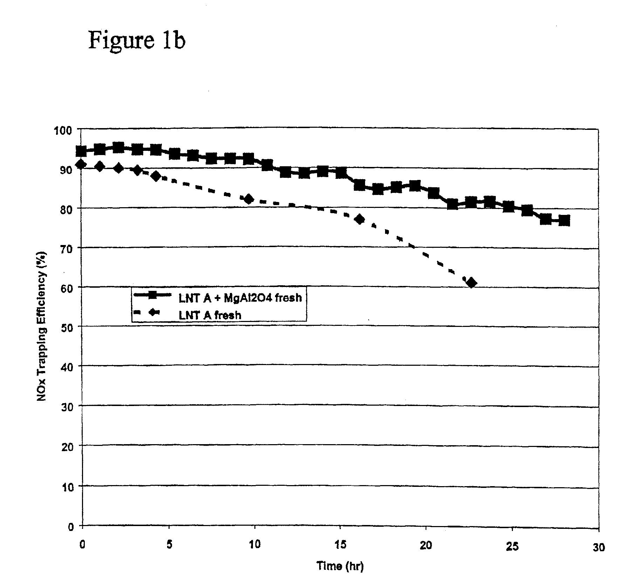

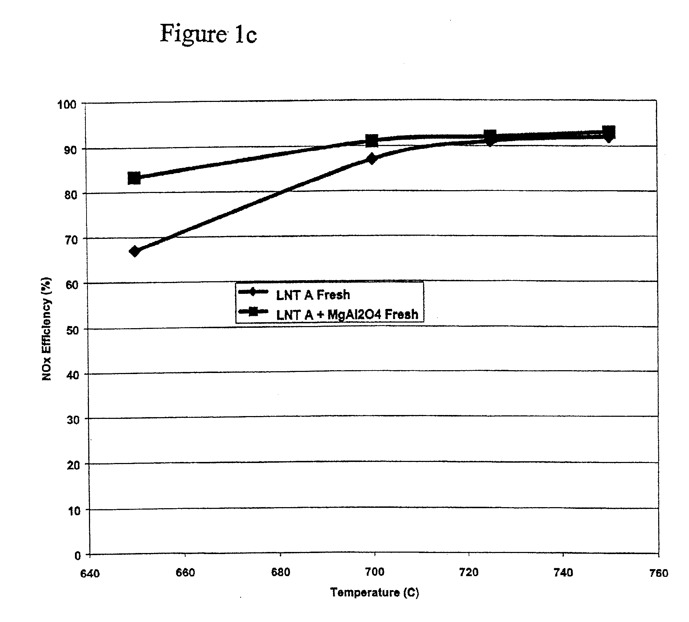

Referring to the figures, FIG 1a shows the temperature profile of LNT A with MgAl₂O₄ and without MgAl₂O₄. FIG 1b shows the LNT A sulphur tolerance with MgAl₂O₄ and without MgAl₂O₄. FIG 1c shows the LNT A desulfation with MgAl₂O₄ and without MgAl₂O₄. As can be seen from FIG 1, the addition of spinel oxides expanded the temperature window slightly. The sulphur tolerance of the LNT A is significantly improved. The desulfation characteristics were also improved. As can be seen, the desulfation temperature to reach a specified NOₓ conversion is lower with the addition of the spinel oxides then that without the spinel oxides.

### EXAMPLE 2

For a preformed LNT, LNT B, a piece of LNT B is cut. 90 (wt) % of the stoichiometric spinel MgAl₂O₄ is mixed with 10 (wt) % of CeO₂. 4 (wt) % of the total LNT B of the mixture is then made into a slurry. The LNT B piece is dipped into the slurry and dried at 120° C for 6 hours. Then it is calcined in the oven at 600° C for 12 hours. A core of the integrated LNT (LNT B doped with spinel) with 19mm diameter and 25mm length is tested in a flow reactor. The formed LNT B is tested under the same conditions as described in Example 1.

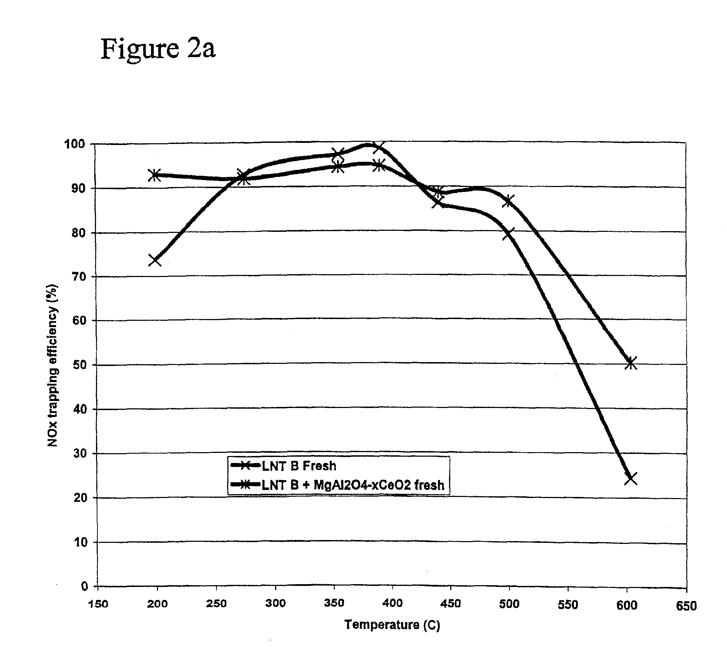

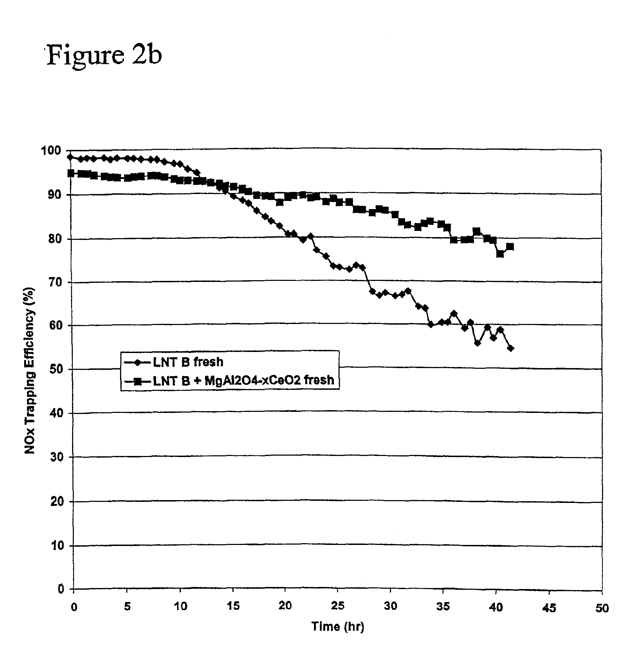

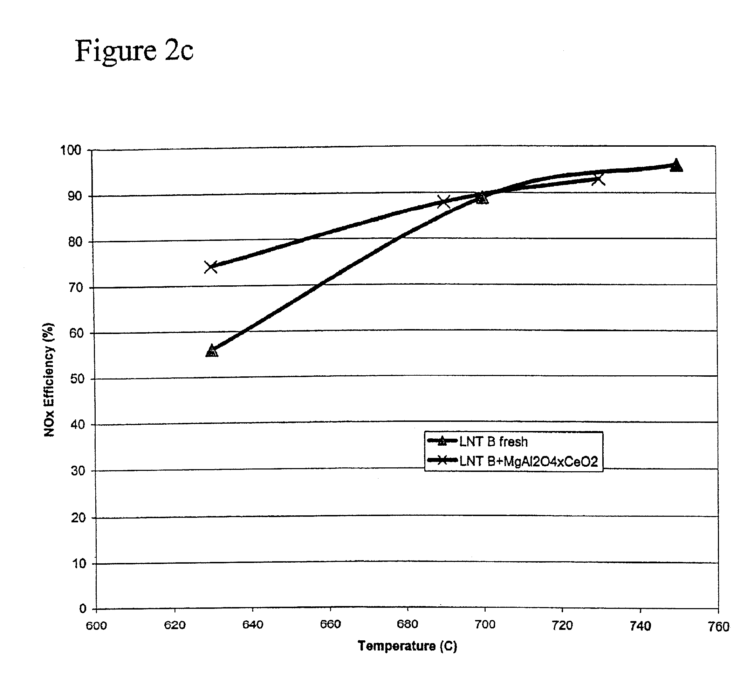

FIG 2a shows the LNT B temperature window with MgAl₂O₄•CeO₂ and without MgAl₂O₄•CeO₂. FIG 2b shows the LNT B sulphur tolerance with MgAl₂O₄•CeO₂ and without MgAl₂O₄•CeO₂. FIG 2c shows the LNT B desulfation with MgAl₂O₄•CeO₂ and without MgAl₂O₄•CeO₂. As can be seen, the temperature window is widened slightly. The sulphur tolerance is improved significantly. The desulfation temperature is lower than without the addition of MgAl₂O₄•xCeO₂.

Therefore in summary, the present invention provides a new series of composite metal oxides that, combined with the active components of a LNT, significantly improve the sulphur tolerance of the LNT while maintaining or improving the other performances of the LNT.

The present invention uses composite metal oxides, in spinel structure, in conjunction with a typical LNT formulation to form an integrated LNT. The composite metal oxides in spinel structure act primarily as a SOₓ trapping element and also a secondary NOₓ trapping element within the integrated LNT. In the application of this integrated LNT, the sulphur oxides are mainly attached to the composite metal oxides in spinel structure under a relatively low temperature (200 to 600° C). When the integrated LNT is saturated with sulphur for a specified NOₓ conversion, the LNT will be desulphated under rich condition at a higher temperature (600 to 750° C), so that the capacity of the LNT for NOₓ trapping and conversion is regenerated. In this integrated LNT, the sulphur is trapped and released in a way that does not allow the sulphur to go to the primary NOₓ trapping element, i.e. the alkali or alkali earth metal oxides, to poison the integrated LNT; thereby, leaving more reactive sites for the NOₓ trapping and conversion.

The present invention provides a composition and method comprising a typical LNT formulation treated with a composite metal oxide in spinel structure. In one embodiment, the composite metal oxide spinel is in powder form and made into a slurry then coated into an LNT after all the other materials have been coated. Then the LNT is dried and calcined. In another embodiment, the spinel oxide slurry is mixed with CeO₂ powder in an amount of 4-15 (wt) % of CeO₂ of the total mixture before coating onto the LNT. In yet another embodiment, the spinel oxide slurry is mixed with CeO₂-ZrO₂ powder, in an amount of 4-15 (wt) % of the total mixture before coating onto the LNT.

The method for removing NOₓ and SOₓ impurities from exhaust gases provides a composition comprising an integrated LNT treated with a composite metal oxide having the spinel structure (AB₂O₄), and passing exhaust gas containing NOₓ and SOₓ over the composition. The NOₓ is stored under lean condition between 200 to 600° C and released and converted under stoichiometric and rich condition between 200 to 600° C. Meanwhile, SOₓ is stored between 200 to 600° C under both lean and rich conditions and is desulphated at a temperature between 600 to 750° C under rich condition, when the trapped sulphur oxides have saturated the composite metal oxides and have thus reduced the NOₓ trapping efficiency to a predetermined value.

Having described the invention in detail and by reference to preferred embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A lean NOₓ trap **characterised in that** the lean NOₓ trap is treated with a composite metal oxide having the formula AB₂O₄, where A is Mg and B is Al.

2. A trap as claimed in claim 1 wherein the composite metal oxide is spinel in structure.

3. A trap as claimed in claim 1 or in claim 2 wherein the composite metal oxide is selected from MgAl₂O₄, MgAl₂O₄•MgO, MgAl₂O₄•CeO₂, or MgAl₂O₄•CeO₂-ZrO₂.

4. A trap as claimed in any of claims 1 to 3 wherein said lean NOₓ trap is doped with said composite metal oxide to provide a composition comprising between about 70-98 wt % lean NOₓ trap and between about 2-30 wt % of said composite metal oxide.

5. A trap as claimed in claim 4 wherein said lean NOₓ trap is doped with said composite metal oxide spinel to provide a composition comprising between about 80-98 wt % lean NOₓ trap and between about 2-20 wt % of said composite metal oxide.

6. A trap as claimed in claim 4 wherein said lean NOₓ trap is doped with said composite metal oxide spinel to provide a composition comprising between about 85-95 wt % lean NOₓ trap and between about 5-15 wt % of said composite metal oxide.

7. A trap as claimed in claim 1 wherein said lean NOₓ trap is doped with MgAl₂O₄•CeO₂ or MgAl₂O₄•Ce-ZrO₂ to provide a composition comprising between about 80-100 wt % lean NOₓ trap and between about 0-20 wt % of MgAl₂O₄•CeO₂ or MgAl₂O₄•Ce-ZrO₂.

8. A trap as claimed in claim 7 wherein said lean NOₓ trap is doped with MgAl₂O₄•CeO₂ or MgAl₂O₄•Ce-ZrO₂ to provide a composition comprising between about 85-98 wt % lean NOₓ trap and between about 2-15 wt % of MgAl₂O₄•CeO₂ or MgAl₂O₄•Ce-ZrO₂.

9. A trap as claimed in claim 7 wherein said lean NOₓ trap is doped with MgAl₂O₄•CeO₂ or MgAl₂O₄•Ce-ZrO₂ to provide a composition comprising between about 90-96 wt % lean NOₓ trap and between about 4-10 (wt) % of MgAl₂O₄•CeO₂ or MgAl₂O₄•Ce-ZrO₂.

10. A method for removing NOₓ and SOₓ impurities from exhaust gases **characterised in that** the method comprises providing a lean NOx trap as claimed in any of claims 1 to 9 and passing exhaust gas containing NOₓ and SOₓ over said composite metal oxide.
